# EUROPEAN PATENT APPLICATION

(11) **EP 1 191 430 A1**
(43) Date of publication of application: **27.03.2002**
(21) Application number: 00410118.4
(22) Date of filing: 22.09.2000
(51) Int. Cl.: G06F 3/033

(54) **Graphical user interface for devices having small tactile displays**

(71) Applicant: Hewlett-Packard Company, A Delaware Corporation, Palo Alto, CA 94304 (US)
(72) Inventor: Mouton, Eric, 72230 Amage (FR)
(74) Representative: Lloyd, Richard Graham

(57) **Abstract**

Apparatus, such as personal digital assistants, mobile phones or mobile computers, is described having a touch sensitive display and circuitry responsive to the display to move a cursor according to movement of a finger thereon and effect input operations according to the position of a cursor in relation to a displayed image, the position of the cursor on the displayed image being displaced by a short distance from the point of contact of the finger with the display so that the position of the cursor when an input operation is effected is visible to the user. The input operations comprise at least a first finger tap serving to define the position of the cursor and a second finger tap serving to confirm the position of the cursor as the point of effect desired by the user.

## Description

### Field of the Invention

The present invention relates to user interfaces for electronic devices, particularly but not exclusively, personal digital assistants, mobile phones or mobile computers, that have small display screens and that employ touch sensing as a means of data input.

### Background of the Invention

Until relatively recently, electronic documents and graphical user interfaces have been primarily viewed and manipulated in electronic devices on desktop or laptop consoles with relatively large displays, typically 15" or 17" CRT or flat panel displays or larger and data input has been effected using keyboard and mouse devices.

Due to increasing focus on compactness of electronic devices, however, the displays, especially in portable electronic devices, are becoming smaller and smaller. Popular electronic devices with a smaller display area include electronic organizers, PDA's (personal digital assistants), and graphical display-based telephones. Also available today are communicators that facilitate various types of communication such as voice, faxes, SMS (Short Messaging Services) messages, e-mail, and Internet-related applications. These products can likewise only contain a small display area. Often such devices do not use a full keyboard or a mouse, rather the display screens of these devices are touch sensitive to allow data input. A wide variety of gesture-based and other user interface techniques have been used and proposed to facilitate data entry through the touch screen.

For instance, US5745116 describes a user interface for a mobile telephone in which a user performs a manual selection or a gesture selection of a screen object on a screen using a pointing device. After a manual selection, such as a single tap, the electronic device automatically presents a temporary directional palette having palette buttons that explicitly state functions of the electronic device. Each palette button has a unique compass direction relative to the original tap area. By making a second tap on a desired palette button, a novice user learns available functions of the electronic device and their corresponding directional gestures. Alternately, the user may perform a gesture selection of both a screen object and a function, such as making a double tap or drawing a line in the appropriate direction, before the directional palette appears on the screen.

This and many other known touch sensitive display screens are accompanied by a stylus to enable a more precise location of an input operation on a graphical user interface than would be possible using a finger, which is generally relatively large in comparison with the display device and the images displayed on it.

However, the use of a stylus has major disadvantages. First the stylus is necessarily a removable component for which a way must be provided of fixing it to the device. In use it is necessary to remove the stylus from its fixed position, hold it like a pen and then replace it in its position after use. It is necessary to take care not to lose it - in fact with many products a set of replacement styli are provided by the manufacturer. The diameter of the stylus is often very reduced, which adds to the risk of dropping and losing it. Moreover, many users are tempted to use a ballpoint pen or other pointed implement instead of the stylus, which can wear or damage the surface of the touch screen.

In addition, at least some types of touch pad are based on a grid of resistive elements, the spacing between which is comparable to the size of the stylus and which is usually greater that the pixel resolution of the display. This can lead to unreliability in use since in practice that point of contact between the stylus and the screen can fall in the interstices of the resistive matrix.

Some products combine a finger input for some operations with the use of a stylus for others. This adds to the difficulty of using the device since the user must continually interchange stylus and finger.

This invention is intended to mitigate the drawbacks of the prior art by providing an interface for such devices that does not require a stylus, but rather allows input to be effected through small active screen elements using a finger alone.

### Summary of the Invention

According to the present invention, there is provided apparatus having a touch sensitive display and circuitry responsive to the display to move a cursor according to movement of a finger thereon and effect input operations according to the position of a cursor in relation to a displayed image, the position of the cursor on the displayed image being displaced by a short distance from the point of contact of the finger with the display so that the position of the cursor when an input operation is effected is visible to the user, wherein the input operations comprise at least a first finger tap serving to define the position of the cursor and a second finger tap serving to confirm the position of the cursor as the point of effect desired by the user.

Large tactile display systems in which a cursor is displayed displaced from the point of contact with a finger are known, for instance US5808605 describes a computer system in which a virtual pointing device is created by detecting a entire hand placed on the touchscreen. Input commands are effected by moving parts of the hand. US 4812833 describes a touch panel input device that includes a sensor for detecting that an operators finger has approached towards a touch input key and displaying a cursor for indicating this key.

The present invention makes use of a similar technique for enabling a cursor to remain visible and combines it with a double tap mechanism to provide a convenient and user-friendly way for small active elements - smaller than a human finger - to be actuated by a finger.

One advantage of this arrangement in at least some embodiments is that it enables the resolution of the touchpad to be decoupled from the size of the active elements, enabling either the size of the latter to be reduced or more satisfactory operation with a coarser resolution of the touchpad.

The touchpad needs only to have sufficient resolution to enable an effective point of contact with the finger to be determined, whilst the point at which an input operation has effect is limited only by the resolution of the display and the point at which active elements become too small to be comfortably visible. The point of contact of the finger and the touch pad can be calculated for instance from a set of matrix points covered by the finger to a greater resolution than that of the matrix itself.

### Brief Description of the Drawings

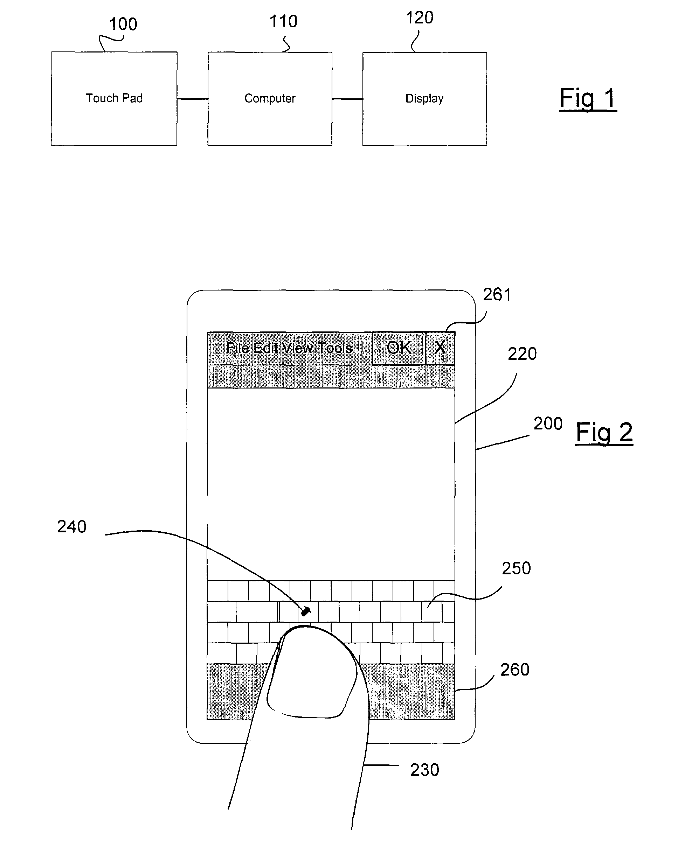

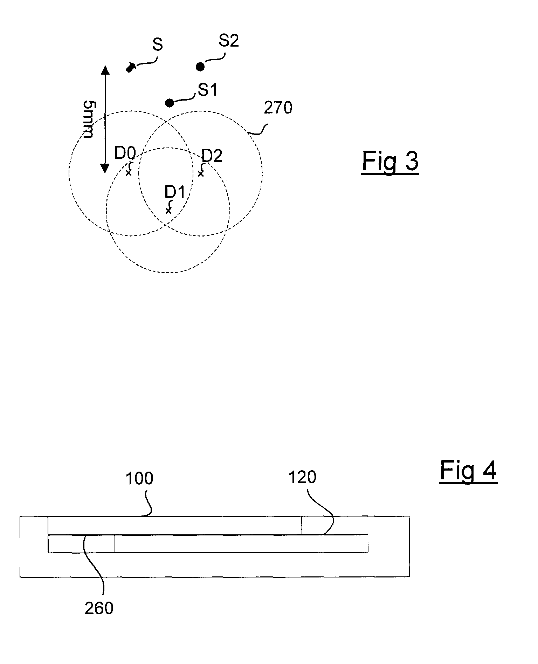

A personal digital assistant embodying the invention will now be described, by way of non-limiting example, with reference to the accompanying diagrammatic drawings, in which:
. Figure 1 is a schematic diagram showing an electronic device having a tactile display;
. Figure 2 shows a personal digital assistant having a graphical user interface;
. Figure 3 illustrates the cursor geometry in the user interface of Fig 2;
. Figure 4 is a flow diagram showing the operation of the user interface.

### Best Mode of Carrying Out the Invention

Fig 1 shows in schematic form an electronic device according to an embodiment of the invention. A touchpad input device 100 for instance of the resistive type sold under the TouchTek4 brand by MicroTouch Systems, Inc. provides input via a suitable controller (not shown) to a computing device 110 that requires input. Computer 110 is connected to a display device 120, of any suitable type such as an LCD display.

As is well known, touchpad input devices are small, touch-sensitive devices that can be used as a pointing device to replace a mouse, trackball or other cursor locator/input device in mouse-driven or other personal computers. The touchpad typically includes a small touch-sensitive screen up to 3" by 5" in size and produces X, Y location coordinates representative of the location of the touching device (finger or inanimate object such as stylus) on its surface. The computer 110 interprets these X,Y coordinates to locate the cursor on the computer display. The user controls the computer cursor location by moving their finger across the sensor surface. Touch pad 100 is transparent and physically overlies the display device 120.

One example of a device with this general structure is the personal digital assistant 200 shown in Fig 2. PDA 200 comprises a touch sensitive display 220, incorporating touch pad 100 and display 120. A user interface is displayed on display 220 in order to allow a user to effect input operations according to the position of a cursor 240 in relation to a displayed image having active elements that are in general smaller than the finger, such as the images of the keys of a keyboard illustrated at 250. Such active elements may of course also include icons, scroll bars, dates on a calendar, characters in a document or the like.

As can be seen in Fig 2, the position of the cursor on the displayed image is displaced by a short distance - around 5mm for instance in preferred embodiments - from the point of contact of the finger 230 with the display so that the position of the cursor when an input operation is effected is visible to the user. This displacement can be set by the user according to their preference and the size of their finger.

Fig 3 is a schematic diagram that shows the geometrical relationship between cursor 240 and zones on contact 270 between and finger and touch screen at an initial location D0 and locations of first and second finger taps D1 and D2 respectively.

It will be appreciated that with this displacement between the point of contact that the position of cursor 240, there is a zone - denoted 260 in Fig 2 - at the bottom of the touchpad into which the cursor cannot be moved. This zone can either be used to display nonactive elements, such as a date and time, or the device can be arranged so that the touchpad is slightly larger in this dimension than the underlying display surface. A similar zone 261 exists at the top of the screen where detection of the point of contact of a finger is unnecessary.

Fig 4 shows in section an embodiment in which touchpad 100 and display screen 120 are laterally displaced one from another to create zones 260 and 261.

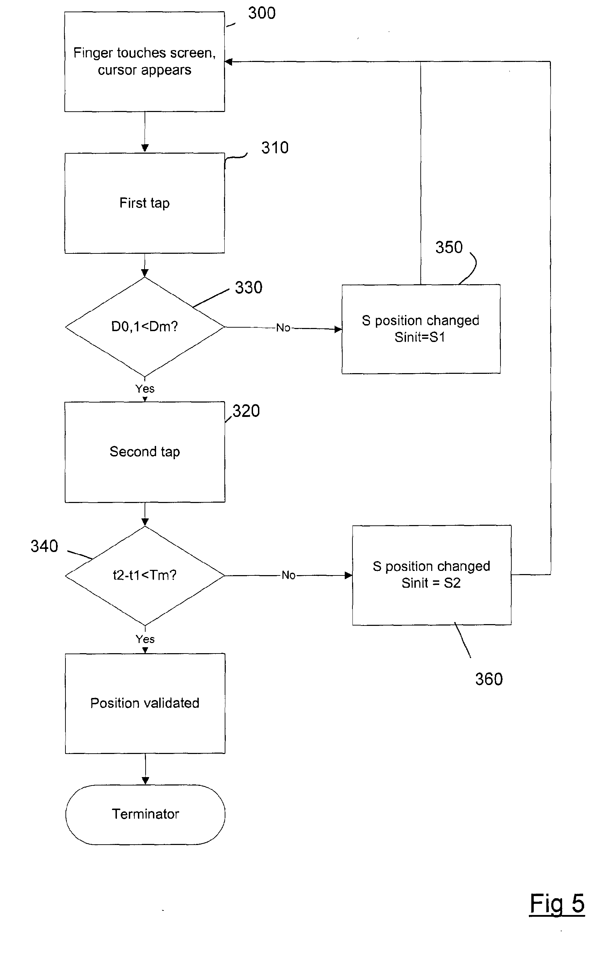

Fig 5 is a flow diagram showing an operating process operated by the graphical user interface software that controls display 220 in this embodiment. In applications to PDA this would be incorporated in the operating system of the device.

The process starts at step 300 when a finger 230 touches the screen. Detection of the finger in contact with the screen for greater than a threshold time - for instance 0.3s - causes cursor 240 to be displayed on the screen. This time threshold is designed to filter accidental touches. A user can then cause the cursor to move on the screen by moving their finger.

Once the user has positioned cursor 240 in a desired location - denoted S in Fig 3 and 4, overlying for instance a chosen key in keyboard 250, a chosen icon or other active display element, the user taps the display twice in relatively quick succession at that location. The first finger tap 310 serves to fix the position of the cursor and the second finger tap 320 serves to confirm the position of the cursor as the point of effect desired by the user.

First a check is carried out to check whether the first tap is spatially associated with the cursor position - decision step 330. If D0 - D1 is less than a threshold distance Dm, where D0 is the position of the last contact point that determined the cursor location and D1 is the point of contact of the first tap, then the position of the cursor is defined as the position S of the last contact point. The distance Dm is preferably settable for optimal performance, but would typically be set at around 3mm. If D0-D1 is greater than the threshold Dm then the cursor is simply moved to the position S1 of the first tap - step 350.

Next the temporal association of the two taps is determined in step 340 - if the time elapsed t2-t1 between the two taps is less than a settable threshold Tm then the input operation associated with whatever active element is located under the cursor is carried out. The time Tm can be set by the user for optimal performance, but could be set to around 0.2s, for instance.

If t2 - t1 is greater than tm a check is carried out to see if the taps are in the same location - decision step 350 and 360. If t2 - t1 is greater than the threshold tm then the cursor is moved to the position S2 of the second tap - step 360.

The position of the second tap is not taken into consideration in order to allow two different fingers to be used for the two taps. If the user chooses to actuate the device in this way, then the taps would be necessarily spatially separated.

The above represents relatively simple embodiment of the invention. It will be understood that many variations are possible. For instance, extra taps may be incorporated after the first tap in order to emulate for instance an mouse double click. Various types of visual feedback may be given to the user, for instance the cursor may change colour, brightness or form once its position has been fixed by the first tap. A longer time threshold may be introduced after which a second tap is ineffective regardless of where it takes place.

Whilst the invention is particularly useful in portable, handheld devices, it will be understood that technique may be applied to any kind of device, whether portable or not, that includes a tactile display, for instance printers, photocopiers, fax machines as well as industrial machinery.

Although a specific embodiment of the invention has been described, the invention is not to be limited to the specific arrangement so described. The invention is limited only by the claims. The claims themselves are intended to indicate the periphery of the claimed invention and are intended to be interpreted as broadly as the language itself allows, rather than being interpreted as claiming only the exemplary embodiment disclosed by the specification.

## Claims

1. Apparatus having a touch sensitive display and circuitry responsive to the display to move a cursor according to movement of a finger thereon and effect input operations according to the position of a cursor in relation to a displayed image, the position of the cursor on the displayed image being displaced by a short distance from the point of contact of the finger with the display so that the position of the cursor when an input operation is effected is visible to the user, wherein the input operations comprise at least a first finger tap serving to define the position of the cursor and a second finger tap serving to confirm the position of the cursor as the point of effect desired by the user.

2. Apparatus as claimed in claim 1 wherein the input operations are associated with display elements that are smaller than a human finger.

3. Apparatus as claimed in claim 1 or claim 2 wherein the input operation is effected if the second finger tap is effected less than a predetermined time after the first finger tap.

4. Apparatus as claimed in claim 3 wherein the input operation is effected if the first finger tap is effected less than a predetermined distance from the contact point that determined the cursor position.

5. Apparatus as claimed in any preceding claim wherein the display is arranged not to display active elements in an edge zone.

6. A touch sensitive display for use in apparatus as claimed in claim 5 in which in which the touch pad extends beyond the edge of the display surface to create the edge zone.

7. A touch sensitive display for use in apparatus as claimed in claim 5 or claim 6 in which the display surface extends beyond the edge of the touch pad at an edge opposite said edge zone.

8. Apparatus as claimed in claim 5 wherein user interface software is programmed not to display active elements in the edge zone.

9. Apparatus as claimed in any preceding claim wherein the circuitry includes an operating system.

10. A method for operating a touch sensitive display including circuitry responsive to the display to move a cursor according to movement of a finger thereon and effect input operations according to the position of a cursor in relation to a displayed image, the method comprising:
displaying a cursor at a position displaced by a short distance from the point of contact of the finger with the display so that the position of the cursor when an input operation is effected is visible to the user; responding to a first finger tap by defining the position of the cursor; and
responding to a second finger tap to confirm the position of the cursor as the point of effect desired by the user.

11. A computer program for controlling apparatus having a touch sensitive display, the program comprising program elements for responding to signals from the display to move a cursor in a displayed image according to movement of a finger thereon and program elements for effecting input operations according to the position of a cursor in relation to the displayed image, the position of the cursor on the displayed image being displaced by a short distance from the point of contact of the finger with the display so that the position of the cursor when an input operation is effected is visible to the user, wherein the input operations comprise at least a first finger tap serving to define the position of the cursor and a second finger tap serving to confirm the position of the cursor as the point of effect desired by the user.
